(19) Europäisches Patentamt
European Patent Office
Office européen des brevets

(11) EP 2 284 212 A1

(12) EUROPEAN PATENT APPLICATION
published in accordance with Art. 153(4) EPC

(43) Date of publication:
16.02.2011 Bulletin 2011/07

(51) Int Cl.:
C08J 3/20 (2006.01)    C08J 3/28 (2006.01)
C08J 7/00 (2006.01)    C08L 29/04 (2006.01)
C08L 101/00 (2006.01)

(21) Application number: 08792601.0

(22) Date of filing: 21.08.2008

(86) International application number:
PCT/JP2008/064880

(87) International publication number:
WO 2009/144840 (03.12.2009 Gazette 2009/49)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 29.05.2008 JP 2008141524

(71) Applicant: Sekisui Chemical Co., Ltd.
Osaka-shi
Osaka 530-8565 (JP)

(72) Inventors:
• INUI, Nobuhiko
  Mishima-gun
  Osaka 618-8589 (JP)
• NAKASUGA, Akira
  Tokyo 105-8450 (JP)

(74) Representative: Hart-Davis, Jason et al
Cabinet Beau de Loménie
158, rue de l'Université
75340 Paris Cedex 07 (FR)

(54) PROCESS FOR PRODUCING POLYMER ALLOY AND POLYMER ALLOY

(57) An object of the present invention is to provide a method for producing a polymer alloy which can provide a polymer alloy that can be, for example, defoamed or molded while maintaining its micro phase-separated structure.

The method for producing a polymer alloy of the present invention includes at least: a step 1 of mixing two or more resins with a solvent, the two or more resins being immiscible with each other at an ordinary temperature and an ordinary pressure, the solvent being liquid or gaseous at an ordinary temperature and an ordinary pressure; a step 2 of heating and pressurizing the solvent into a high-temperature, high-pressure fluid or a supercritical fluid, and mixing the solvent in this state with the resins; a step 3 of restoring the mixture obtained in the step 2 to an ordinary temperature and an ordinary pressure; and a step 4 of irradiating the mixture obtained in the step 3 with ionizing radiation.

[Fig. 1]

EP 2 284 212 A1

**Description**

TECHNICAL FIELD

The present invention relates to a method for producing a polymer alloy which can provides a polymer alloy that can be, for example, defoamed or molded while maintaining its micro phase-separated structure. The present invention also relates to a polymer alloy produced by the method for producing a polymer alloy.

BACKGROUND ART

So much attention is focused on polymer alloys produced by mixing two or more polymers that are immiscible with each other under ordinary conditions because they have properties that cannot be achieved by a single polymer. Among these, polymer alloys having a micro phase-separated structure of two or more polymers are provided with properties deprived from the respective resin components. For example, a polymer alloy produced by adding a high heat-resistant amorphous polymer to a low heat-resistant amorphous polymer with high moldability will be excellent in both of moldability and heat resistance. In addition, these polymer alloys, unlike copolymers such as block copolymers and random copolymers, can be produced without the need for complicated copolymerizing operation.

As a method for producing a polymer alloy having a micro phase-separated structure by mixing two or more polymers that are immiscible with each other under ordinary conditions, a kneading method with use of a miscibilizing agent has been employed. If such a method, the miscibilizing agent should be selected according to polymer materials and selection thereof which enables production of a polymer alloy having a micro phase-separated structure and desired properties is very difficult. For some combinations of polymers, suitable miscibilizing agents have not been found yet.

For solving this problem, Patent Document 1 discloses a method for producing a polymer alloy having a microdispersed phase-separated structure, including the steps of: melting two polymers with a supercritical gas or a mixture of supercritical gases which are gaseous at an ordinary temperature and an ordinary pressure; thoroughly mixing the melted polymer mixture for a sufficient time until the viscosity of the melted polymer mixture is reduced by at least 10% of the original value; sufficiently cooling the melted polymer mixture under stirring for a sufficient time until the viscosity of the melted polymer mixture reaches at least the original value again; and rapidly decompressing the mixing vessel. Patent Document 2 discloses a method for producing a polymer alloy having a 100 nm or smaller micro phase-separated structure, including the steps of: converting a solvent that is liquid at an ordinary temperature and an ordinary pressure into a high-temperature, high-pressure fluid to make two or more immiscible polymers miscible with each other; and rapidly reducing the pressure to vaporize the solvent.

The methods for producing a polymer alloy disclosed in References 1 and 2 include, as a production step, a cooling step by "adiabatic expansion" in which a supercritical gas or a mixtures containing supercritical gases is rapidly decompressed from a compressed state to that the high-temperature, high-pressure fluid is evaporated. Such a cooling step causes a large number of bubbles in resulting polymer alloys. In order to obtain a transparent molded article from such a polymer alloy with bubbles, a defoaming step should be performed in which the polymer alloy is kneaded under heating to high temperature. Such a defoaming step, however, may destroy the micro phase-separated structure of the polymer alloy. Even if the polymer alloy can maintain its micro phase-separated structure through the defoaming step, the micro phase-separated structure will be destroyed in a molding step in which the polymer alloy is heated again. For these reasons, these methods can be applied only to restricted cases.

Patent Document 3 discloses a method for producing a polymer alloy, which can omit a defoaming step by rapidly cooling a supercritical gas or a mixture containing supercritical gases in a compressed state to the glass transition temperature or lower without rapidly decompressing the supercritical gas or mixture from the compressed state in the production process. This method, however, may also result in destruction of the micro phase-separated structure when severe heating treatment or kneading such as thermo-molding is subsequently performed. Thus, this method is not sufficiently improved to provide useful polymer alloys having a micro phase-separated structure. Further, such a cooling step without rapid decompression has an industrial problem and specifically is not suited for consecutive production.

Patent Document 1: Japanese Kokai Publication Hei-2-134214 (JP-A H02-134214)
Patent Document 2: Japanese Kokai Publication Hei-10-330493 (JP-A H10-310493)
Patent document 3: U.S. Pat. No. 7129322

DISCLOSURE OF THE INVENTION

PROBLEMS TO BE SOLVED BY THE INVENTION

In view of the abode problems, an object of the present invention is to provide a method for producing a polymer alloy which can provide a polymer alloy that can be, for example, defoamed or molded while maintaining its micro phase-separated structure. A further object of the present invention is to provide a polymer alloy produced by this methods for producing a polymer alloy.

MEANS FOR SOLVING THE PROBLEMS

The present invention provides a method for producing a polymer alloy, including at least:

a step 1 of mixing two or more resins with a solvent, the two or more resins being immiscible with each other at an ordinary temperature and an ordinary pressure, the solvent being liquid or gaseous at an ordinary temperature and an ordinary pressure;
a step 2 of heating and pressurizing the solvent into a high-temperature, high-pressure fluid or a supercritical fluid, and mixing the solvent in this state with the resins;
a step 3 of restoring the mixture obtained in the step 2 to an ordinary temperature and an ordinary pressure; and
a step 4 of irradiating the mixture obtained in the step 3 with ionizing radiation.
Hereinafter, the present invention is described in more detail.

The present inventors found that a micro phase-separated structure of a polymer alloy produced by mixing two or more resins that are immiscible with each other at an ordinary temperature and an ordinary pressure, in a high-temperature, high-pressure fluid or a supercritical fluid is remarkably stabilized by an adequate dose of ionizing radiation, and further found that the micro phase-separated structure is less likely to be destroyed even when a defoaming step including kneading under heating to high temperature or a molding step including severe heating treatment or kneading is subsequently performed.
Typically, although a polymer alloy having a micro phase-separated structure is formed, the structure is destroyed as the flowability of resin components is increased by heating. However, ionizing radiation to a polymer alloy will induce radicals in the resin components in the polymer alloy such that crosslinking redactions among the resins will occur. This may be the reason that the micro phase-separated structure is stabilized.
The term "polymer alloy" used herein is intended to include resin mixtures having a phase-separated structure in which resins are mixed and each resin is present as uniformly dispersed small resin domains. These resin mixtures preferably have an ultra-micro phase-separated structure containing resin domains each having a size of not more than 10 $\mu$m (more preferably not more than 1 $\mu$m). The polymer alloys specified herein may have a structure in which the resin domains are extremely small and the resins are made completely miscible with each other.
In the step 1 of the method for producing a polymer alloy of the present invention, two or more resins that are immiscible with each other at an ordinary temperature and an ordinary pressure are mixed with a solvent that is liquid or gaseous at an ordinary temperature and an ordinary pressure.
Any resins may be used in combination for the polymer alloy of the present invention, provided that they are immiscible or poorly miscible with each other. Examples of combinations of resins include resin mixtures of a crystalline resin and an amorphous resin, ionic resin mixtures of cationic or anionic resins that are poorly miscible with each other, resin mixtures of a nonpolar resin and a polar resin, mixtures of resins having glass transition points or melting points remarkably different from each other, and mixtures of resins having viscosities remarkably different from each other. The method for producing a polymer alloy of the present invention facilitates production of a polymer alloy even from a combination of resins having polarities remarkably different from each other although production of a polymer alloy from a combination of such resins is especially difficult. Examples of combinations of such resins each having a different polarity include a norbornene resin (low-polar resin) and polyvinyl alcohol (polar resin).
The resins used for the polymer alloy of the present invention may have a linear or branched structure, and may have a cross-linked structure. The tacticity of the resins may be any of isotactic, syndiotactic and atactic. The resins may be copolymers such as block copolymers, random copolymers, or graft copolymers, or may be oligomers, or high-molecular-weight or ultrahigh-molecular-weight polymers.
Resins that can be suitably processed by the methods for producing a polymer alloy of the present invention are not particularly limited. Suitable examples thereof include resins with high degradation resistance to ionizing radiation, that is, resins whose main chain is less likely to be cut when exposed to ionizing radiation.
Examples of such resins with high degradation resistance include polyethylene, ethylene-vinyl acetate copolymers, acrylonitrile-styrene copolymers, acrylonitrile-butadiene-styrene copolymers, acrylic resins, polystyrene, ethylene-vinyl alcohol copolymers, methylpenten resins, polyphenylene ether, polyamide, polyphenylene ether, polyetheretherketone, polyallyl ether ketone, polyamide-imide, polyimide, polyetherimide, norbornene resins, polyvinyl alcohol, urethane resins, polyvinyl pyrrolidone, polyvinyl butyral, and liquid crystal polymers.
It should be noted that the degradation resistance to ionizing radiation widely changes with irradiation conditions. For example, degradation of resins is less likely to occur in nitrogen atmosphere or at an appropriate temperature. Therefore, use of a resin that is generally considered to have low degradation resistance to ionizing radiation is also enabled by appropriately setting conditions.

Alternatively, a resin that is considered to have low degradation resistance to ionizing radiation may be modified to enhance the degradation resistance to ionizing radiation. Such modification is not particularly limited and may be performed in a common manner. Examples thereof include (meth)acrylic modification, epoxy modification, amino modification, carbonyl modification, halogen modification, silanol modification, isocyanate modification, hydroxyl modification, diazo modification, thiol modification, and acryloyl modification. Among these, modifications that give reaction activity to ionizing radiation are more preferable.

Examples of the solvent that is liquid at an ordinary temperature and an ordinary pressure include water, and organic solvents.

Examples of the organic solvents include hydrocarbon-based organic solvents, ether-based organic solvents, ester-based organic solvents, ketone-based organic solvents, alcohol-based organic solvents, dimethyl sulfoxide, and N,N-dimethylformamide.

Examples of the hydrocarbon-based organic solvents include hexane, heptane, cyclohexane, and toluene.

Examples of the ether-based organic solvents include diethylether, dibutylether, tetrahydrofuran, and dioxane.

Examples of the ester-based organic solvents include ethyl acetate, and butyl acetate.

Examples of the ketone-based organic solvents include acetone, methyl ethyl ketone, and methyl isobutyl intone.

Examples of the alcohol-based organic solvents include methanol, ethanol, and isopropyl alcohol.

Examples of the solvent that is gaseous at an ordinary temperature and an ordinary pressure include $N_2$, $CO_2$, $N_2O$, chlorofluorocarbons, hydrochlorofluorocarbons, low-molecular-weight alkanes, low-molecular-weight alkenes such as ethylene, and ammonia.

Examples of the chlorofluorocarbons include chlorodifluoromethane and dichlorotrifluoroethane.

Examples of the low-molecular-weight alkanes include n-butane, propane, and ethane.

Solvents that are liquid at an ordinary temperature of 25°C an ordinary of 0.1 MPa and have critical temperature critical pressure and suitable among the above examples. In the case of a solvent that is gaseous at an ordinary temperature and an ordinary pressure, the pressure should be controlled to gradually decrease so as to present the solvent from foaming. In contrast, in the case of a solvent that is liquid at an ordinary temperature and an ordinary pressure, the internal pressure of a mixing vessel will hardly change during decompression, and therefore the solvent will be free from bubbles. Any of these solvents may be used alone, or two or more of these may be used in combination. Especially, when a thermoplastic norbornene resin, which is described later, is used as one of the two or more immiscible resins, water is preferably used as the solvent. Even a thermoplastic norbornene resin that dissolves only in cyclohexane at an ordinary temperature and an ordinary pressure in practical use can be sufficiently dissolved in water in a high-temperature, high-pressure fluid state or supercritical fluid state with a reduced polarity. Thermoplastic norbornene resins are insoluble in water at an ordinary temperature and an ordinary pressure and therefore can be easily separated and are easy to handle. Alcohols are also preferable as the solvent because they are also concerted into a high-temperature, high-pressure state or supercritical state at comparatively low temperatures and do not cause thermal decomposition of the resins.

Preferably, the solvent is used in a sufficient volume such that the resins can be stirred therein. Specifically, the volume of the solvent that is liquid at an ordinary temperature and an ordinary pressure is preferably equal to or more than the total volume of the two or more resins that are immiscible with each other at an ordinary temperature and an ordinary pressure.

The viscosity of the solvent in a high-temperature, high-pressure state or supercritical state is high and can be increased to a level higher than the viscosities of the resins. Therefore, even resins having a too high viscosity can be mixed with other resins when stirred in the solvent in a high-temperature, high-pressure state or supercritical state with a high viscosity although mixing of such resins by common mixing techniques is difficult.

To the solvent, a miscibilizing agent may be added, if necessary.

Examples of the miscibilizing agent include oligomers and polymers having segments miscible with each resin used for a polymer alloy. When the miscibilizing agent is a polymer, the polymer may be any of a random polymer, block polymer, and graft polymer.

The resins used for a polymer alloy may be provided with a function as a miscibilizing agent by partial modification of their structures. Examples of miscibilizing agents thus obtained include maleic acid-modified polypropylene, carboxylic acid-modified polypropylene, amino-terminated nitrile butadiene rubber, carboxylic acid-modified polyethylene, chlorinated polyethylene, sulfonated polystyrene, hydroxyl-terminated polyolefin, hydroxyl-terminated polybutadiene, maleic acid-modified ethylene butylene rubber, and ethylene-acrylic acid copolymers. Examples of graft polymers effective as a miscibilizing agent include polyolefins with a vinyl polymer grafted to the side chain, and polycarbonate with a vinyl polymer grafted to the side chain. Examples of commercially available miscibilizing agents include "Modiper" (product of NOF Corporation) and "Admer" (product of Mitsui Chemicals Inc.).

Subsequently, in the method for producing a polymer alloy of the present invention, the second step is preformed in which the solvent is heated and pressurized into a high-temperature, high-pressure fluid or a supercritical fluid and then mixed in this state with the resins.

The lower limit of the temperature of the high-temperature, high-pressure fluid or supercritical fluid is preferably 100˚C, while the upper limit thereof is preferably 700˚C. If the temperature of the high-temperature, high-pressure fluid or supercritical fluid is lower than 100˚C, the ultra-micro phase-separated structure of the resulting polymer alloy may not be sufficiently formed. If the temperature is higher than 700˚C, the resins may be decomposed. In addition, in this case, the energy required for raising the temperature is very large and the energy loss is also large, leading to an uneconomically high cost. The upper limit of the temperature of the high-temperature, high-pressure fluid or supercritical fluid is more preferably 400˚C.

The lower limit of the pressure of the high-temperature, high-pressure fluid or supercritical fluid is preferably 0.5 MPa, while the upper limit thereof is preferably 100 MPa. If the pressure of the high-temperature, high-pressure fluid or supercritical fluid is less than 0.5 MPa, the ultra-micro phase-separated structure of the resulting polymer alloy may not be sufficiently formed. If the pressure is more than 100 MPa, the energy required for raising the pressure is very large, leading to an uneconomically high cost. The upper limit of the pressure of the high-temperature, high-pressure fluid or supercritical fluid is more preferably 60 MPa.

The processing time required for mixing the resins in the high-temperature, high-pressure state or supercritical state is preferably shorter. When the mixing time is short, decomposition of the resins can be suppressed. If the mixing time is long, the resins may be decomposed into a liquid. The mixing time is, although it differs depending on processing temperature, preferably not longer than 30 minutes, more preferably not longer than 20 minutes, and still more preferably not longer than 10 minutes at a temperature of not lower than 400˚C, and is preferably not longer than one hour, and more preferably not longer than 30 minutes at a temperature of not higher than 400˚C.

Examples of methods enabling the mixing step to be completed in such a short time include a method in which the respective resins are melted and mixed together in advance. Specifically, if the respective resins are melted and mixed together in advance, the mixture is rapidly made into a polymer alloy by converting the solvent into a high-temperature, high-pressure state or supercritical state. This method can eliminate the possibility that a resulting polymer alloy has a composition different from a material composition and makes it possible to obtain a polymer alloy having almost the same composition as the material composition.

The time required for conversion into a high-temperature, high-pressure state or supercritical state is also preferably short. When the time is short, decomposition of the resins can be suppressed. Examples of methods for conversion into a high-temperature, high-pressure state or supercritical state in a short time include a method in which the resin mixture is preheated at an ordinary pressure in advance.

The method for producing a polymer alloy of the present invention makes it possible to adjust the size of domain particles of the phase-separated structure of the resulting polymer alloy by optionally setting the temperature and pressure in a production vessel before mixing materials or at an initial stage of the mixing.

Next, in the method for producing a polymer alloy of the present invention, the step 3 is performed in which the mixture obtained in the step 2 is restored to an ordinary temperature and an ordinary pressure.

In the step 3, the high-temperature, high-pressure fluid or supercritical fluid may be decompressed and therefore cooled by heat absorption caused by adiabatic expansion, or may be rapidly cooled to the glass transition temperature or lower without being decompressed.

In order to improve the reaction efficiency in the electron beam treatment performed in the step 4, a non-foamed polymer alloy is preferable. Accordingly, it is more preferable to rapidly cool the fluid to the glass transition temperature or lower without decompressing.

when the fluid is rapidly cooled to the glass transition temperature or lower without being decompressed, the resulting polymer alloy contains few bubbles and therefore no longer requires a defoaming step. This procedure, however, is not suitable for continuous production and application of this procedure to industrial mass production of polymer alloys is difficult.

When the procedure of rapidly cooling the fluid to the glass transition temperature or lower without decompressing is employed, the rate of temperature decrease from the production temperature to the glass transition temperature is preferably not less than 25˚C/min. At rates of less than 25˚C/min, the resins are exposed to high temperature for a long time, possibly resulting in degradation thereof. The rate of temperature decrease is more preferably not less than 50˚C/min.

When there are plural glass transition temperatures, the fluid may be rapidly cooled to the lowest glass transition temperature among the glass transition temperatures of the resins, or may be rapidly cooled to the glass transition temperature of each resin step by step. In this case, any phase structure can be formed by changing the cooling rate.

For example, in the case where the upper critical solution temperature is higher than the glass transition temperature of a matrix component and where the glass transition temperature of a domain components is higher than the glass transition temperature of the matrix component, a polymer alloy with a micro phase-separated structure can be obtained instead of a polymer alloy with a complete miscible structure by maintaining the fluid for a predetermined time at a temperature higher than the glass transition temperature of the matrix component to precipitate the domain components and then by rapidly cooling the fluid.

In the case where the glass transition temperatures of the resins are room temperature or lower, the phase structure can be maintained to some extent by rapidly cooling the fluid to room temperature or lower.

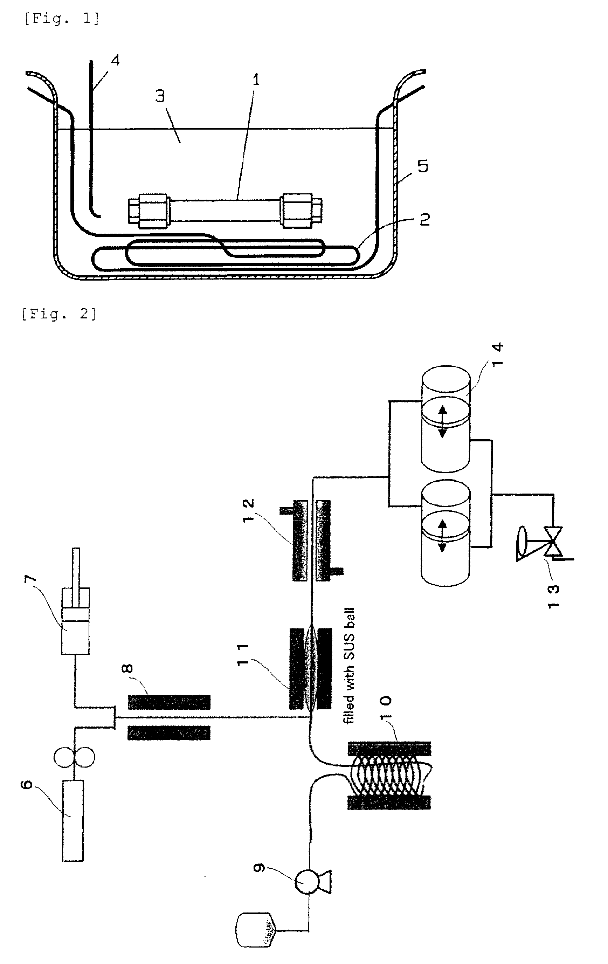

Fig. 1 shows one example of a production apparatus used in the steps 1 to 3 of the method for producing a polymer alloy of the present invention. In the production apparatus shown in Fig. 1, a production vessel 1 is submerged in a metal salt 3. The metal salt 3 is melted under heating by a heater 2 and its temperature is controlled by a thermocouple 4.

Although the metal salt molten bath is used as heating in the production apparatus shown in Fig. 1, heating means such as an electric heater, a burner, combustion gas, steam, heating medium and sand bath may be used instead of the molten bath.

Since production vessel 1 is used for production under conditions in the supercritical range or the vicinity of supercritical range, its material and thickness are selected so that the production vessel 1 can withstand such conditions. Examples of the material of the production vessel 1 include carbon steel; special steel containing Ni, Cr, V, Mo or the like; austenite stainless steel; hastelloy; titanium; those obtained by lining these materials with glass, ceramic, carbide or the like; and those obtained by cladding these materials with other metals.

The shape of the production vessel 1 is not particularly limited, and the production vessel 1 may have, for example, a tank or tubular shape, or may have any special shape. In view of heat resistance and pressure resistance, a tank or tubular shape is particularly preferable. In the case of a batch system, an autoclave or a tubular reaction tube is preferably used.

It is preferable to set a hard ball or obstacle with a predetermined shape, which are made of a metal, ceramic or the like, in the production vessel 1 to cause a turbulent flow. When a hard ball is provided in the production vessel 1, a turbulent flow is caused by shaking the production vessel 1. As a result, the stirring efficiency can be improved, and therefore the reaction efficiency can be improved. More preferably, the production vessel 1 is filled with hard balls or the like because the stirring efficiency is increased only by shaking the vessel.

The filling ratio of hard balls is preferably 20 to 80%. As filling ratios out of this range, the stirring efficiency may be low. Here, it is preferable to use two or more types of hard balls having a different diameter. This can increase the filling ratio and therefore improve the stirring efficiency.

The production vessel 1 is preferably provided with a plate through which orifices are opened. In the case where the production vessel 1 is provided with the plate through which orifices are opened, a turbulent flow is caused by shaking the production vessel 1. As a result, the stirring efficiency can be improved and hence the reaction efficiency can be improved.

As an example of the method for producing a polymer alloy of the present invention using the production apparatus shown in Fig. 1, the following method is mentioned: Two or more immiscible resins and a solvent are fed into the production vessel 1; the production vessel is properly sealed; the production vessel is submerged in the metal salt molten bath 5; and the solvent is heated and pressurized into a high-temperature, high-pressure fluid or supercritical fluid. This state is maintained for a predetermined time to make the two or more resins miscible. Then, the production vessel 1 is immediately submerged into a cooling bath and is rapidly cooled. After the production vessel 1 is sufficiently cooled, a polymer alloy produced in the production vessel 1 is taken out.

Fig. 2 shows another example of a production apparatus used in the steps 1 to 3 of the method for producing a polymer alloy of the present invention. In the production apparatus shown in Fig. 2, material resins are supplied from an extruder 6 and a syringe feeder 7, respectively. The supplies resins are melted under heating by a sheath heater 8 and mixed. Meanwhile, a fluid that can be converted into a high-temperature, high-pressure fluid or a supercritical fluid is fed by a quantitative pump 9 to a metal salt molten bath 10 and then is heated in the bath. Trough the heating, the fluid becomes a high-temperature, high-pressure fluid or supercritical fluid.

The resin mixture in a molten state is mixed with the high-temperature fluid and the resulting mixtures is kept warm in an electric furnace 11. The resin mixture is formed into a polymer alloy before it reaches a cooler 12. The fluid is cooled in the cooper 12 and becomes no longer a high-temperature, high-pressure fluid or supercritical fluid.

The resulting polymer alloy is reserved together with the fluid in a recovery tank 14 provided with a back pressure regulating valve 13.

In the method for producing a polymer alloy of the present invention, the step 4 is performed in which the mixture obtained in the step 3 is irradiated with ionizing radiation. The micro phase-separated structure of the obtained polymer alloy is remarkably stabilized by an adequate dose of ionizing radiation. The micro phase-separated structure of the polymer alloy is less likely to be destroyed even when a defoaming step including kneading under heating to high temperature or a molding step including severe heating treatment or kneading is subsequently performed.

The "ionizing radiation" is intended two include high-energy electromagnetic radiation and high-energy corpuscular radiation which induce ionization of atoms. Specific Examples of forms of the ionizing radiation include electron beams, X-rays, γ rays, neutron rays, and high energy ions. Any of these may be employed alone or mixed radiation of these may be employed.

Specifically, for example, the irradiation with ionizing radiation is performed by a method including irradiation by an electron beam irradiation device produced by NHV Corporation.

In the method for producing a polymer alloy of the present invention, the dose of the ionizing radiation is significantly important. If the dose of the ionizing radiation is too small, the micro phase-separated structure of the polymer alloy may not be sufficiently stabilized. If the dose of the ionizing radiation is too large, the resulting polymer alloy may have an excessively cross-linked structure and therefore may not become flowable even when heated. As a result, molding of the resulting polymer alloy may be impossible. If the dose of the ionizing radiation is further larger, the main chains of the resins constituting the polymer alloy may be cut, resulting in degradation of the polymer alloy.

The dose of the ionizing radiation is preferably determined so that the resulting polymer alloy has a viscoelasticity tan $\delta$ of not less than 1 when the viscoelasticity tan $\delta$ is measured under conditions of a strain of 0.1% and a frequency of 10 Hz at a temperature 20°C higher than the highest flow temperature determined by differential scanning calorimetry (DSC), and that the phase structure size remains unchanged even after the resulting polymer alloy is heated to a temperature not lower than the highest flow temperature and then cooled. With a viscoelasticity tan $\delta$ of not less than 1, the resulting polymer alloy exhibits excellent flowability when heated and is easily thermo-molded.

The "highest flow temperature determined by DSC" used herein means the highest heat absorption peak temperature, except resin decomposition peak temperatures, among heat absorption peak temperatures determined by DSC by decreasing the temperature from room temperature to -50°C at 1.0°C/min; keeping the temperature at -50°C for five minutes; and increasing the temperature from -50°C to a resin decomposition temperature at 10°C/min.

A method for measuring the viscoelasticity is not particularly limited and common measuring methods may be used. Examples thereof include shear measuring modes, extension measuring modes, and compression measuring modes. Particularly, a shear measuring mode using a resin sheet of abort 1 mm is preferable because errors caused by a boundary conditions are less likely to occur.

The specific dose of the ionizing radiation is determined according to the resins to be used. For example, when the polymer alloy contains a later-described thermoplastic norbornene resin and polyvinyl alcohol in combination, the lower limit of the dose of the ionizing radiation is preferably 2 Mrad, while the upper limit thereof is preferably 10 Mrad. If the dose of the ionizing radiation is less than 2 Mrad, the micro phase-separated structure of the polymer alloy may not be sufficiently stabilized. If the dose of the ionizing radiation is more than 10 Mrad, the resulting polymer alloy may not become flowable even when heated. As a result, molding of the resulting polymer alloy may be impossible.

For other combinations of resins, the dose should be determined by performing an experiment on each combination. The dose for the combination of a thermoplastic norbornene resin and polyvinyl alcohol helps easy determination of the dose for other combinations. Specifically, when a resin with comparatively low degradation resistance to ionizing radiation is used, the dose is set to be low; and when a resin with comparatively high degradation resistance to ionizing radiation is used, the dose is set to be high.

For any combination of reins, the lower limit of the dose of ionizing radiation is about 0.01 Mrad, while the upper limit thereof is preferably about 50 Mrad.

In the step 4, the mixture obtained in the step 3 is preferably formed into a plate of about 0.01 to 30 mm and then irradiated with ionizing radiation. In the case where the mixture is formed into a plate and then irradiated with ionizing radiation, the resins can be entirely and uniformly irradiated with ionizing radiation.

The polymer alloy produced by the method for producing a polymer alloy of the present invention has a remarkably stable micro phase-separated structure and the micro phase-separated structure will not be destroyed even when a defoaming step or a thermo-molding step is preformed. Therefore, the polymer alloy can provide a remarkably transparent molded product that maintains the performance of the polymer alloy.

The polymer alloy produced by the method for producing a polymer alloy of the present invention is also one aspect of the present invention.

When the polymer alloy of the present invention is analyzed for phase transition phenomenon using a differential calorimeter, at least the phase transition phenomenon of one of the two or more resins disappears or a phase transition phenomenon is observed at a temperature different from the temperatures of the phase transition phenomena of the resins. This indicates that the polymer alloy has an ultra-micro phase-separated structure.

Typically, whether a polymer alloy has an ultra-micro phase-separated structure or not can be determined by dying the alloy with ruthenium tetraoxide or the like and observing it by an electron microscope. In the case where the polymer alloy has an ultra-micro phase-separated structure, observation thereof shows a mixed state of the resins in which the resins are present as uniformly dispersed small resin domains. However, two or more resins are observed in the state that they are completely dissolved mutually and resign domains are not observed by an electron microscope, in some cases, depending on the type of resin. In this case, whether or not the polymer alloy has an ultra-micro phase-separated structure can be checked by measuring the phase transition temperature of each resin in advance using a differential calorimeter and then by measuring the phase transition temperature of the polymer alloy formed of these resins. Specifically, in the case where these resins are completely dissolved mutually or are dispersed in a mixed state in which the resins are present as very small resin domains uniformly dispersed, the polymer alloy has only one phase transition temperature.

It can be therefore determined that a polymer alloy is formed in the cases that the phase transition phenomenon of one of the resins, which has been observed, disappears and is hence not observed when the polymer alloy reaches the phase transition temperature of this resin, and that another phase transition phenomenon is additionally observed at a phase transition temperature different from the temperatures of the phase transition phenomena of the resins which have been observed before.

The size of each resin domain can be calculated in the following manner. Specifically, a polymer alloy is subjected to small angle X-ray scattering measurement to measure the angle dependency of scattering strength, and based on the results, the size is calculated by the Guinier's equation given by the following formula.

$$\ln(I(s)) = \ln(I(0)) - s^2 \cdot Rg^2/3$$

In the formula, Rg represents a domain size and I(0) represents a scattering strength at a scattering angle of 0.

In the case where the polymer alloy of the present invention is intended to be used in optical applications, the resins are preferably selected from resins with excellent transparency.

Such resins with excellent transparency are not particularly limited and examples thereof include thermoplastic norbornene resins, polymethyl methacrylate, polystyrene, polycarbonate, and polyesters. Preferably, the resins have a similar refractive index to each other because high transparency is easily achieved. For some optical applications which require a low refractive index, resins having a low refractive index such as thermoplastic norbornene resins, polymethyl methacrylate and polystyrene are preferable.

The polymer alloy of the present invention produced for optical applications is superior in transparency, heat resistance, low hygroscopicity, low birefringent properties and moldability. Owing to these properties, the polymer alloy of the present invention can be widely used in various applications including optical applications such as lenses (e.g. lenses for general cameras, lenses for video cameras, telescope lenses, spectacle lenses, lenses for laser beams), optical disks (e.g. optical videodisks, audiodisks, document file disks, memory disks), optical materials (e.g. optical fibers), image receiving transfer sheets, and various films and sheets; packages for various electronic devices; window glasses; print boards; sealing materials; binder for inorganic or organic compounds.

When the polymer alloy of the present invention contains a thermoplastic norbornene resin, the moldability, moisture permeability, adhesiveness and the like are improved without impairing the heat resistance and transparency of the thermoplastic norbornene resin. Also, thermal deterioration and defects caused during melt-molding can be suppressed.

The thermoplastic norbornene resin is not particularly limited. Examples of the thermoplastic norbornene resin include hydrogenated products of ring-opened polymers (including copolymers) of norbornene monomers; and copolymers of norbornene monomers and olefinic monomers such as ethylene and/or α-olefin. All of these resins have substantially no unsaturated bond.

As the norbornene monomer which is a material for the thermoplastic norbornene resin, those described in Japanese Kokai Publication Hei-5-39403 (JP-A H05-39403), Japanese Kokai Publication Hei-5-212828 (JP-A H05-212828) and Japanese Patent Nos. 3038825, 3019741 and 3030953 may be used. Examples of these monomers include norbornene, methanooctahydronaphthalene, dimethanooctahydronaphthalene, dimethanododecahydroanthracene, dimethanodecahydroanthracene and trimethanododecahydroanthracene, and substitution products of these; dicyclopentadiene, 2,3-dihydrocyclopentadiene, methanooctahydrobenzoindene, dimethanooctahydrobenzoindene, methanodecahydrobenzoindene, dimethanodecahydrobenzoindene, methanooctahydrofluorene and dimethanooctahydrofluorene, and substitution products of these. Any of these norbornene monomers may be used alone, or two or more of these may be used in combination.

The substituents in the substitution products are not particularly limited and conventionally known hydrocarbon groups and polar groups are acceptable as the substituents. Examples of the substituents include alkyl groups, alkylidene groups, aryl groups, cyano group, halogen atoms, alkoxycarbonyl groups, and pyridyl group. Examples of the substitution include 5-methyl-2-norbornene, 5,5-dimethyl-2-norbornene, 5-ethyl-2-norbornene, 5-butyl-2-norbornene, 5-ethylidene-2-norbornene, 5-methoxycarbonyl-2-norbornene, 5-cyano-2-norbornene, 5-methyl-5-methoxycarbonyl-2-norbornene, 5-phenyl-2-norbornene, and 5-phenyl-5-methyl-2-norbornene.

The number average molecular weight of the thermoplastic norbornene resin is not particularly limited and is typically preferably 5000 to 200000. When the number average molecular weight is less than 5000, the mechanical strength of molded articles (especially, optical films and the like) produced from the polymer alloy of the present invention may be insufficient. When the number average molecular weight is more than 200000, the moldability may be impaired. The number average molecular weight is more preferably 7000 to 35000, and is still more preferably 8000 to 30000.

The number average molecular weight of the thermoplastic norbornene resin can be measured by gel permeation chromatography (GPC).

The thermoplastic norbornene resin used in the present invention may be, as described above, either a resin having a polar group or a resin having no polar group. In the case of a thermoplastic norbornene, resin having a polar group, the polar group may exist to the extent that the optical characteristics and moldability are not impaired and the presence of the polar group is rather preferable to impart proper moisture permeability to molded articles.

Such polar groups are not particularly limited and examples thereof include halogen groups (chlorine group, bromine group and fluorine group), hydroxyl group, carboxylic acid groups, ester groups, amino group, acid anhydride groups, cyano group, silyl group, epoxy group, acryl group, methacryl group, and silanol group. In particular, ester groups and acid anhydride groups are preferable because they can provide reactivity by deprotection.

Example of thermoplastic norbornene resins available as commercial products among the above-mentioned thermoplastic norbornene resins include "Arton" (resin having a polar groups, product of JSR Corporation) and "Zeonor" (resin having no polar group, product of Zeon Corporation).

In the case of using the above-mentioned thermoplastic norbornene resin in the polymer alloy of the present invention, no particular limitation is imposed on the immiscible resin(s) used in combination to form the polymer alloy. Examples thereof include polyethylene; polypropylene; ethylene-$\alpha$-olefin copolymers; ethylene-vinyl acetate copolymers; ethylene-(meth)acrylic acid ester copolymers and ethylene-(meth)acrylic acid copolymers such as ethylene-ethylacrylate copolymers; polyolefin resins such as polybutadiene; poly(meth)acrylic acid esters such as poly-methyl methacrylate and polybutyl acrylate; polycarbonate; polyvinyl acetate; polyamide; polyacetal; polyphenylene ether; ionomers; polyvinyl chloride; polyimides; polyesters; polyethylene oxide; polyarylate; ABS resins; plastic fluorides; polyvinylidene fluoride; polyvinylidene chloride; polystyrene; polysulfone; polyvinyl ether; polyvinyl alcohol; and polylactate. In particular, non-crystalline resins or less-crystalline resins such as polymethyl methacrylate, polycarbonate, polysulfone, triacetyl cellulose polyvinyl alcohol, and crystalline resins having a small crystal size are preferable for applications that require transparency such as optical films.

When at least one of the two or more resins used in the polymer alloy of the present invention is a transparent resin, the transparent resin and the immiscible resin(s) preferably form an ultra-micro phase-separated structure of 100 nm or less in size. When the size of the phase-separated structure is more than 100 nm, the transparency, haze and the like are low and therefore the resulting polymer alloy may be unsuitable for optical applications. It is also possible to impart moisture permeability to the thermoplastic norbornene resin by mixing a resin having high moisture permeability to form an ultra-micro phase-separated structure of 100 nm or less in size.

The ratio between the two or more resins that are immiscible with each other at an ordinary temperature and an ordinary pressure in the polymer alloy of the present invention is as follows: based on 100 parts by weight of the base resin among the resins, the preferable amount of the resin(s) immiscible with the base resin is 0.01 to 100 parts by weight. The amount of the resin(s) immiscible with the base resin is more preferably 0.01 to 15 parts by weight, and is still more preferably 3 to 10 parts by weight.

Also, in the case of using the thermoplastic norbornene resin, when the compounding amount of the immiscible resin(s) used in combinations with the thermoplastic norbornene resin to form a polymer alloy can be defined based on another standard. Specifically, in order to ensure the heat resistance and moldability of the resulting polymer alloy, the amount of the immiscible resin(s) preferably falls within a range where the decrease in the glass transition temperature caused by mixing the resin(s) with the thermoplastic norbornene resins is not more than 30˚C. When the decrease in the glass transition temperature is more than 30˚C, the heat resistance which the thermoplastic norbornene resin originally has is impaired and the range of use of the resulting polymer alloy may be largely limited in applications such as optical films.

Known additives such as an antioxidant, ultraviolet absorber, lubricant and antistatic agent may be used in the polymer alloy of the present invention in amounts within a range of not affecting the object of the present invention. Examples of the antioxidant include 2,6-di-t-butyl-4-methylphenol, 2,2'-dioxy-3,3'-di-t-butyl-5,5'-dimethyldiphenylmethane, and tetrakis[methylene-3-(3,5-dit-butyl-4-hydroxyphenyl)propionate]methane. Examples of the ultraviolet absorber include 2,4-dihydroxybenzophenone, and 2-hydroxy-4-methoxybenzophenone.

When the polymer alloy of the present invention contains the above-mentioned thermoplastic norbornene resin, the polymer alloy is superior in transparency, heat resistance, low hygroscopicity, low birefringent properties and moldability. Owing to these properties, the polymer alloy of the present invention can be widely used in various applications including optical applications such as lenses (e.g. lenses for general cameras, lenses for video cameras, telescope lenses, spectacle lenses, lenses for laser beams), optical disks (e.g. optical videodisks, audiodisks, document file disks, memory disks), optical materials (e.g. optical fibers), image deceiving transfer sheets, and various films and sheets; packages for various electronic devices; window glasses; print boards; sealing materials; and binders for inorganic or organic compounds.

A molded article and a transparent article formed of the polymer alloy of the present invention are also other aspects of the present invention.

The molded article formed of the polymer alloy of the present invention may be obtainable by known molding techniques such as extrusion molding, injection molding, compression molding, blow molding and calender molding.

In addition, a hard coat layer containing an inorganic compound, organic silicon compound (e.g. silane coupling agent), acrylic resin, vinyl resin, melamine resin, epoxy resin, fluorine resin, silicone resin or the like may be formed on the surface of the molded article formed of the polymer alloy of the present invention. This structure makes it possible to improved the heat resistance, optical characteristics, chemical resistance, abrasive resistance, moisture permeability and the like of the molded article.

Examples of techniques for forming the hard coat layer include known methods such as a heat-curing method, ultraviolet ray-curing method, vacuum deposition method, sputtering method and ion plating method.

When the polymer alloy of the present invention contains the thermoplastic norbornene resin as one of its components, the polymer alloy is suitable for optical films, particularly phase difference films, polarizing plate protective films and the like in which excellent moldability and heat resistance of the polymer alloy are fully utilized.

An optical film formed of the polymer alloy of the present invention is also aspect of the present invention.

The optical film of the present invention preferably has a tearing strength of 0.1 N or more. If the tearing strength is than 0.1 N, the of use thereof as an optical film may be limited this tendency is particularly significant when thickness of the film is as thin as 10 $\mu$m or less.

The optical film of the present invention preferably has a light transmittance of 60% or more. When the transmittance is less than 60%, the range of use thereof as an optical film may be limited. The transmittance is more preferably 70% or more, and is still more preferably 80% or more.

The optical film of the present invention preferably has a haze of 20% or less. When the haze is less than 20%, the range of use thereof as an optical film may be limited. The haze is more preferably 10% or less, and is still more preferably 5% or less.

The optical film of the present invention can be formed by, for example, an extrusion molding method, press molding method or the like. The thickness of the optical film of the present invention is typically 10 to 300 $\mu$m.

The polymer alloy produced by the method for producing a polymer alloy of the present invention can exhibit the properties of the resin(s) other than the base resin without sacrificing the excellent properties of the base resin. In addition, the polymer alloy can be molded into a high-performance molded article because the micro phase-separated structure of the polymer alloy is preserved even after heating processes such as melt-molding and high-temperature defoaming treatment are performed on the polymer alloy again after the formation thereof.

EFFECTS OF THE INVENTION

The invention provides a method for producing a polymer alloy which can provide a polymer alloy that can be, for example, defoamed or while maintaining its micro phase-separated structure. The present invention also provides a polymer alloy produced by the method for producing a polymer alloy.

BEST MODE FOR CARRYING OUT THE INVENTION

Hereinafter, the present invention is described in more detail based on examples, but is not limited only to these examples.

(Example 1)

To a batch type production vessel 1 (tubular vessel made of SUS316, Tube Bomb Reactor, internal volume 100 cc) shown in Fig. 1, a predetermined solvent, a thermoplastic norbornene resin ("Zeonor 1600", product of Zeon Corporation), and polyvinyl alcohol (PVA, "KURARAY POVAL CP-1000", product of Kuraray Co., Ltd.) were fed in predetermined amounts shown in Table 1. The air in the production vessel was properly substituted with nitrogen gas. Then, the production vessel 1 was submerged in a metal salt molten bath 5 (product of Shin-Nippo Chemical Co., Ltd.) equipped with a micro-heater 2 (product of Sukegawa Electric Co., Ltd.) and treated for a predetermined time at the temperature and pressure shown in Table 1. Subsequently, the production vessel 1 was rapidly cooled in a cooling bath, and then ice-cooled. Thereafter, the resulting polymer alloy was taken out and dried.

The dried polymer alloy molded into a sheet having a thickness of about 0.8 mm by heat pressing at 185°C for two minutes. The obtained sheet was irradiated with an electron beam at an accelerating voltage of 500 kV in nitrogen atmosphere by an electron beam irradiation device (product of NHV Corporation). The dose of the electron beam is shown in Table 1. The sheet was then molded into a film having a thickness of about 55 $\mu$m by heat pressing at 220°C for ten minutes.

(Examples 2 to 4, Comparative Example 2)

A film was produced in the same manner as in Example 1, except that the dose of the electron beam was changed as shown in Table 1.

(Comparative Example 1)

A polymer alloy was produced and dried in the same manner as in Example 1. Then, the polymer alloy was molded into a film having a thickness of about 55 $\mu$m by heat pressing at 220˚C for ten minutes without being treated with an electron beam.

(Evaluation)

The films obtained in Examples 1 to 4 and Comparative Examples 1 and 2 were measured for glass transition temperature (melting point), tan $\delta$, change in the phase structure size, light transmittance, and moisture permeability by the methods described below.
Table 1 shows the results.

(Measurement of Glass Transition Temperature (Melting Point))

The glass transition temperature (melting point) was measured by DSC2920 modulated DSC (product of TA Instruments) while the temperature was increased under the temperature condition program described below.
Temperature condition program:

decreasing the from room temperature to - 50˚C at 10˚C/min;
keeping the temperature at -50˚C for five minutes; and
increasing the temperature from -50˚C to 280˚C at 10˚C/min.

(Measurement of Tan $\delta$)

Each of the obtained films was cut into a sample having a length of about 45 mm and a width of 5 mm. The sample was set on RSA-2 (product of Reometrics) with a distance between clamps of 36 mm and examined for temperature dispersion at a temperature increased rate of 5˚C/min in the range of from room temperature to 220˚C in an extension measuring mode (strain 0.1%, frequency 10 Hz). The value of tan $\delta$ at a temperature 20˚C higher than the highest flow temperature that had been determined by DSC was read out among the obtained values of tan $\delta$.

(Change in Phase Structure Size)

The phase-separated structure was observed by a transmission electron microscope. The following symbols represent the criteria for evaluation.

○: No change was observed in the phase structure size before and after heat pressing at 220˚C for ten minutes.
×: The size increased 5 or more times after the heat pressing.
As an example, the electron microscope photographs of the phase structure of Example 1 before and after heat pressing at 220˚C for ten minutes are shown in Figs. 3 and 4, respectively. The electron microscope photographs of the phase structure of Comparative Example 1 before and after heat pressing at 220˚C for ten minutes are shown in Figs. 5 and 6, respectively.

(light Transmittance)

The light transmittance was measured by a haze meter (HC III DPK, product of Tokyo Denshoku Co., Ltd.) according to JIS K 7150.
A polymer alloy that could not be molded into a film was evaluated a "-".

(Moisture Permeability)

The moisture permeability was determined according to JIS Z 0208 1976.
A polymer alloy that could not be molded into a film was evaluated as "-".

[Table 1]

| | | | Example 1 | Example 2 | Example 3 | Example 4 | Comparative Example 1 | Comparative Example 2 |
|---|---|---|---|---|---|---|---|---|
| Composition (part by weight) | | Solvent | $H_2O$ | $H_2O$ | $H_2O$ | $H_2O$ | $H_2O$ | $H_2O$ |
| | | | 38 | 38 | 38 | 38 | 38 | 38 |
| | | Thermoplastic norbornene resin | 4.5 | 4.5 | 4.5 | 4.5 | 4.5 | 4.5 |
| | | PVA | 0.5 | 0.5 | 0.5 | 0.5 | 0.5 | 0.5 |
| Condition | | Mixing temperature (°C) | 400 | 400 | 400 | 400 | 400 | 400 |
| | | Mixing pressure (Mpa) | 30 | 30 | 30 | 30 | 30 | 30 |
| | | Mixing time (min) | 5 | 5 | 5 | 5 | 5 | 5 |
| | | EB dose (Mrad) | 2 | 3.5 | 6 | 10 | ~ | 15 |
| Evaluation | | Glass transition temperature (°C) Melting point (°C) | 164 | 164 | 164 | 164 | 161 174 | 165 |
| | | tan δ | 2.1 | 1.8 | 1.5 | 1.0 | 2.4 | 0.5 |
| | | Change in phase structure size | ○ | ○ | ○ | ○ | × | ○ |
| | | Light transmittance (%) | 91 | 91 | 88 | 89 | 67 | − |
| | | Moisture permeability (g/m²·day·μm) | 10.2 | 10.9 | 10.2 | 9.8 | 2.4 | − |

(Example 5)

To the batch type production vessel 1 (tubular vessel made of SUS316, Tube Bomb Reactor, internal volume 100 cc) shown in Fig. 1, a predetermined solvent, a thermoplastic norbornene resin ("Zeonor 1600", product of Zeon Corporation), and polyvinyl alcohol (PVA, "KURAPAY POVAL CP-1000", product of Kuraray Co., Ltd.) were fed in predetermined amounts shown in Table 2. The air in the production vessel was properly substituted with nitrogen gas. Then, production vessel 1 was submerged in the metal salt molten bath 5 (product of Shin-Nippo Chemical Co., Ltd.) equipped with micro-heater 2 (product of Sukegawa Electric Cho., Ltd.) and treated for a predetermined time at the temperature and pressure shown in Table 2. Subsequently, the production vessel 1 was opened to decrease the pressure. Whereafter, the resulting polymer alloy was taken out and dried.

The dried polymer alloy was molded into a foamed sheet with a thickness of about 0.8 mm by heat pressing at 185°C for two minutes. After proper substitution with nitrogen gas, the obtained foamed sheet was irradiated with an electron beam at an accelerating voltage of 500 kV in nitrogen atmosphere by an electron beam irradiation device (product of NHV Corporation). The dose of the electron beam is shown in Table 1. After the electron beam irradiation, defoaming treatment was carried out in which the polymer alloy was kneaded by PLASTOMILL (LABO PLASTOMILL MODEL 100C100, product of Toyo Seiki Seisaku-sho Ltd.) at 230°C. The defoamed polymer alloy was then molded into a film having a thickness of about 55 μm by heat pressing at 220°C for ten minutes.

(Examples 6 to 8, Comparative Example 5)

A film was produced in the same manner as in Example 5, except that the dose of the electron beam was changed as shown in Table 2.

(Comparative Example 3)

A polymer alloy was produced and dried in the same manner as in Example 5. Then, the polymer alloy was molded into a film having a thickness of about 55 μm by heat pressing at 220°C for ten minutes without being treated with an electron beam.

(Comparative Example 4)

A Polymer alloy was produced and dried in the same manner as in Example 5. Then, the polymer alloy was defoamed by kneading using PLASTOMILL (LABO PLASTOMILL MODEL 10OC100, product of Toyo Seiki Seisaku-sho Ltd.) at 230°C without being treated with an electron beam. The defoamed polymer alloy was then molded into a film halving a thickness of about 55 μm by heat pressing at 220°C for ten minutes.

(Evaluation)

The films obtained in Examples 5 to 8 and Comparative Examples 3 to 5 were measured for glass transition temperature (melting point), change in the phase structure size, light transmittance, and moisture permeability by the methods described above.
Table 2 shows the results.

[Table 2]

| Category | Property | Example 5 | Example 6 | Example 7 | Example 8 | Comparative Example 3 | Comparative Example 4 | Comparative Example 5 |
|---|---|---|---|---|---|---|---|---|
| Composition (part by weight) | Solvent | H₂O | H₂O | H₂O | H₂O | H₂O | H₂O | H₂O |
| | Thermoplastic norbornene resin | 38 | 38 | 38 | 38 | 38 | 38 | 38 |
| | | 4.5 | 4.5 | 4.5 | 4.5 | 4.5 | 4.5 | 4.5 |
| | PVA | 0.5 | 0.5 | 0.5 | 0.5 | 0.5 | 0.5 | 0.5 |
| Condition | Mixing temperature (°C) | 400 | 400 | 400 | 400 | 400 | 400 | 400 |
| | Mixing pressure (MPa) | 30 | 30 | 30 | 30 | 30 | 30 | 30 |
| | Mixing time (min) | 5 | 5 | 5 | 5 | 5 | 5 | 5 |
| | EB dose (Mrad) | 2 | 3.5 | 6 | 10 | – | – | 15 |
| Evaluation | Glass transition temperature (°C) / Melting point (°C) | 164 | 164 | 164 | 164 | 164 / 174 | 161 / 174 | 164 |
| | tan δ | 2.0 | 1.7 | 1.6 | 1.2 | 2.4 | 2.8 | 0.4 |
| | Change in phase structure size | ○ | ○ | ○ | ○ | × | × | ○ |
| | Light transmittance (%) | 88 | 87 | 84 | 82 | 12 | 59 | – |
| | Moisture permeability (g/m²·day·µm) | 9.9 | 10.4 | 10.1 | 9.5 | 1.0 | 1.5 | – |

(Example 3)

To the batch type production vessel 1 (tubular vessel made of SUS316, Tube Bomb Reactor, internal volume 100 cc) shown in Fig. 1, a predetermined solvent, a thermoplastic norbornene, resin ("Zeonor 1600", product of Zeon Corporation), and polyvinyl alcohol (PVA, "KURARAY POVAL CP-1000", product of Kuraray Co., Ltd.) were fed in predetermined amounts shown in Table 3. The air in the production vessel was properly substituted with nitrogen gas. Then, the production vessel 1 was submerged in the metal salt molten bath 5 (product of Shin-Nippo Chemical Co., Ltd.) equipped with the micro-heater 2 (product of Sukegawa Electric Co., Ltd.) and treated for a predetermined time at the temperature and pressure shown in Table 3. Subsequently, the production vessel 1 was rapidly cooled in the cooling bath, and then ice-cooled. Thereafter, the resulting polymer alloy was taken out and dried.

The dried polymer alloy was molded into a sheet having a thickness of about 0.8 mm by heat pressing at 185°C for two minutes. The obtained sheet was irradiated with an electron beam at an accelerating voltage of 500 kV in nitrogen atmosphere by an electron beam irradiation device (product of NHV Corporation). The dose of the electron beam is shown in Table 2. The sheet was then molded into a film having a thickness of about 55 $\mu$m by heat pressing at 220°C for ten minutes.

(Comparative Example 6)

A polymer alloy was produced and dried in the same manner as in Example 1. Then, the polymer alloy was molded into a film having a thickness of about 55 $\mu$m by heat pressing at 220°C for ten minutes without being treated with an electron beam.

(Examples 10 to 12)

Predetermined amounts of a thermoplastic norbornene resin ("Zeonor 1600", product of Zeon Corporation) and polyvinyl alcohol (PVA, "KURARAY POVAL CP-1000", product of Kuraray Co., Ltd.) shown in Table 3 were fed by a feeder to a twin-screw kneader ("KZW15TW-60MG-NH(-5000)", product of Technovel Corporation) and then plasticized while the kneader was driven at the number of revolutions of about 1000 rpm. Subsequently, a predetermined amount of solvent(s) was poured to the mixture from a resin kneading unit. The resin kneading unit was set to the temperature and resin pressure shown in Table 3. The mixture was extruded from a die and then immediately formed into a sheet by a cooling roller. The resulting polymer alloy was dried into a sheet having a thickness of about 0.8 mm. The mixing time shown in Table 3 is a calculated time elapsed after feeding of the material resins until extrusion-molding from the die.

The dried sheet-shaped polymer alloy was irradiated with an electron beam at an accelerating voltage of 500 kV in nitrogen atmosphere by an electron beam irradiation device (product of NHV Corporation). The dose of the electron beam is shown in Table 2. After the electron beam irradiation, the polymer alloy was defoamed by kneading using PLASTOMILL (LABO PLASTOMILL MODEL 100C100, product of Toyo Seiki Seisaku-sho Ltd.) at 230°C. The defoamed polymer alloy was then molded into a film having a thickness of about 55 $\mu$m by heat pressing at 220°C for ten minutes.

(Comparative examples 7 to 9)

A polymer alloy was produced and dried in the same manner as in Examples 10 to 12. Then, the polymer alloy was defoamed by kneading by PLASTOMILL (LABO PLASTOMILL MODEL 100C100, product of Toyo Seiki Seisaku-sho Ltd.) at 230°C without being treated with an electron beam. The defoamed polymer alloy was then molded into a film having a thickness of about 55 $\mu$m by heat pressing at 220°C for ten minutes.

(Evaluation)

The films obtained in Examples 9 to 12 and Comparative Examples 6 to 9 were measured for glass transition temperature (melting point), tan $\delta$, change in the phase structure size, light transmittance, and moisture permeability by the methods described above.

Table 3 shows the results.

[Table 3]

| | | | Example 9 | Example 10 | Example 11 | Example 12 | Comparative Example 6 | Comparative Example 7 | Comparative Example 8 | Comparative Example 9 |
|---|---|---|---|---|---|---|---|---|---|---|
| Composition (part by weight) | | Solvent 1 | MeOH | MeOH | – | $H_2O$ | MeOH | MeOH | – | $H_2O$ |
| | | | 38 | 38 | – | 5 | 38 | 38 | – | 5 |
| | | Solvent 2 | – | – | Liquefied $CO_2$ | Liquefied $CO_2$ | – | – | Liquefied $CO_2$ | Liquefied $CO_2$ |
| | | | – | – | 25 | 20 | – | – | 25 | 25 |
| | | Thermoplastic norbornene resin | 4.5 | 4.5 | 4.5 | 4.5 | 4.5 | 4.5 | 4.5 | 4.5 |
| | | PVA | 0.5 | 0.5 | 0.5 | 0.5 | 0.5 | 0.5 | 0.5 | 0.5 |
| Condition | | Mixing temperature (°C) | 300 | 300 | 300 | 300 | 300 | 300 | 300 | 300 |
| | | Mixing pressure (Mpa) | 20 | 20 | 20 | 20 | 20 | 20 | 20 | 20 |
| | | Mixing time (min) | 5 | 10 | 10 | 10 | 5 | 5 | 10 | 10 |
| | | EB dose (Mrad) | 3.5 | 6 | 6 | 6 | – | – | – | – |
| Evaluation | | Glass transition temperature (°C) Melting point (°C) | 164 | 164 | 164 | 163 | 161 174 | 161 173 | 160 174 | 161 174 |
| | | tan δ | 1.8 | 1.3 | 1.4 | 1.3 | 2.6 | 2.6 | 2.4 | 2.3 |
| | | Change in phase structure size | O | O | O | O | × | × | × | × |
| | | Light transmittance (%) | 91 | 88 | 74 | 81 | 63 | 67 | 51 | 52 |
| | | Moisture permeability ($g/m^2 \cdot day \cdot \mu m$) | 10.2 | 10.2 | 7.1 | 8.7 | 3.2 | 4.1 | 2.8 | 2.7 |

(Examples 13 to 16)

To the batch type production vessel 1 (tubular vessel made of SUS316, Tube Bomb Reactor, internal volume 100 cc) shown in Fig. 1, a predetermined solvent, a thermoplastic norbornene resin ("Zeonor 1600", product of Zeon Corporation), polyvinyl alcohol (PVA, "KURARAY POVAL CP-1000", product of Kuraray Co., Ltd.), polyvinylene butyral (PVB, "S-LEC BM-1", product of Sekisui Chemical Co., Ltd.), and polystyrene (PS, "G757", product of Japan PolyStyrene Inc.) were fed in predetermined amounts shown in Table 4. The air in the production vessel was properly substituted with nitrogen gas.

Then, the production vessel 1 was submerged in the metal salt molten bath 5 (product of Shin-Nippo Chemical Co., Ltd.) equipped with the micro-heater 2 (product of Sukegawa Electric Co., Ltd.) and treated for a predetermined time at the temperature and pressure shown in Table 4. Subsequently, the production vessel 1 was rapidly cooled in a cooling bath, and then ice-cooled. Thereafter, the resulting polymer alloy was taken out and dried.

The dried polymer alloy was molded into a sheet having a thickness of about 0.8 mm by heat pressing for two minutes at the sheet forming temperature shown in Table 4. The obtained sheet was irradiated with an electron beam at an accelerating voltage of 500 kV in nitrogen atmosphere by an electron beam irradiation device (product of NHV Corporation). The dose of the electron beam is shown in Table 3. The sheet was then molded into a film having a thickness of about 55 μm by heat pressing for ten minutes at the molding temperature shown in Table 3.

(Comparative examples 10 to 13)

A polymer alloy was produced and dried in the same manner as in Examples 13 to 16. Then, the polymer alloy was molded into a film having a thickness of about 55 μm by heat pressing at the molding temperature shown in Table 4 for ten minutes without being treated with an electron beam.

(Evaluation)

The films obtained in Examples 13 to 16 and Comparative Examples 10 to 13 were measured for glass transition temperature (melting point), tan δ, change in the phase structure size, and light transmittance by the methods described above.

Table 4 shows the results.
[Table 4]

| | | Example 13 | Example 14 | Example 15 | Example 16 | Comparative Example 10 | Comparative Example 11 | Comparative Example 12 | Comparative Example 13 |
|---|---|---|---|---|---|---|---|---|---|
| Composition (part by weight) | Solvent 1 | MeOH | MeOH | MeOH | MeOH | MeOH | MeOH | MeOH | MeOH |
| | | 38 | 38 | 38 | 38 | 38 | 38 | 38 | 38 |
| | Thermoplastic norbornene resin | 4.5 | 0.5 | – | – | 4.5 | 0.5 | – | – |
| | PVB | 0.5 | 4.5 | 4.5 | 4 | 0.5 | 4.5 | 4.5 | 4 |
| | PVA | – | – | 0.5 | – | – | – | 0.5 | – |
| | PS | – | – | – | 1 | – | – | – | 1 |
| Condition | Mixing temperature (°C) | 300 | 300 | 300 | 300 | 300 | 300 | 300 | 300 |
| | Mixing pressure (Mpa) | 20 | 20 | 20 | 20 | 20 | 20 | 20 | 20 |
| | Mixing time (min) | 5 | 5 | 5 | 5 | 5 | 5 | 5 | 5 |
| | Sheet forming temperature (°C) | 180 | 180 | 110 | 110 | – | – | – | – |
| | EB dose (Mrad) | 3.5 | 3.5 | 3.5 | 4.2 | – | – | – | – |
| | Molding temperature (°C) | 220 | 220 | 150 | 150 | 220 | 220 | 150 | 150 |
| Evaluation | Glass transition temperature (°C) | 154 | 84 | 77 | 78 | 161 75 | 159 75 | 75 90 | 76 90 |
| | tan δ | 1.4 | 1.1 | 1.2 | 1.5 | 1.5 | 2.1 | 1.6 | 2.0 |
| | Change in phase structure size | ○ | ○ | ○ | ○ | × | × | × | × |
| | Light transmittance (%) | 90 | 87 | 80 | 79 | 62 | 58 | 52 | 42 |

(Examples 17 to 21)

Predetermined amounts of low density polyethylene (LLDPE, "AFFINITY PL1850" (product of Dow Chemical Company), polyvinyl alcohol (PVA, "KURARAY POVAL CP-1000", product of Kuraray Co., Lid.), polyvinylene butyral (pub, "S-LEC BM-1", product of Sekisui Chemical Co., Lid.), acrylonitrile-butadiene rubber (NBR, "N222L", product of JSR Corporation), and Pylon 6 (PA6, "UBE nylon 1022B", product of Ube Industries, Ltd.) shown in Table 5 were fed by a feeder to a twin-screw kneader ("KZW15TW-60MG-NH(-5000)", product of Technovel Corporation) and then plasticized while the kneader was driven at the number of revolutions of about 1000 rpm. Subsequently, predetermined amounts of solvents were poured to the mixture from a resin kneading unit. The resin kneading unit was set to the temperature and resin pressure shown in Table 5. The mixture was extruded from a die and then immediately formed into a sheet by a cooling roller. The resulting polymer alloy was dried into a sheet having a thickness of about 0.8 mm. The mixing time shown in Table 5 is a calculated time elapsed after feeding of the material resins until extrusion-molding from the die.

The obtained sheet was irradiated with an electron beam at an accelerating voltage of 500 kV in nitrogen atmosphere by an electron beam irradiation device (product of NHV Corporation). The dose of the electron beam is shown in Table 4. The sheet was then molded into a sheet having a thickness of about 300 $\mu$m by heat pressing. The molding temperature and time are shown in Table 5.

(Comparative Examples 14 to 18)

A polymer alloy was produced and dried in the same manner as in Examples 17 to 21. Then, the polymer alloy was molded into a having a thickness of about 300 $\mu$m by heat pressing without being treated with an electron beam. The molding temperature and time are shown n Table 5.

(Evaluation)

The films obtained in Examples 17 to 21 and Comparative Examples 14 to 18 where measured for glass transition temperature (melting points), tan $\delta$, and change in the phase structure size by the methods described above. Table 5 shows the results.

[Table 5]

| | | Example 17 | Example 18 | Example 19 | Example 20 | Example 21 | Comparative Example 14 | Comparative Example 15 | Comparative Example 16 | Comparative Example 17 | Comparative Example 18 |
|---|---|---|---|---|---|---|---|---|---|---|---|
| Composition (part by weight) | Solvent 1 | $H_2O$ / 5 | $H_2O$ / 5 | $H_2O$ / 5 | $H_2O$ / 5 | $H_2O$ / 5 | $H_2O$ / 5 | $H_2O$ / 5 | $H_2O$ / 5 | $H_2O$ / 5 | $H_2O$ / 5 |
| | Solvent 2 | $CO_2$ / 20 | $CO_2$ / 20 | $CO_2$ / 20 | $CO_2$ / 20 | $CO_2$ / 20 | $CO_2$ / 20 | $CO_2$ / 20 | $CO_2$ / 20 | $CO_2$ / 20 | $CO_2$ / 20 |
| | LLDPE | 4 | 4 | 4 | 4 | – | 4 | 4 | 4 | 4 | – |
| | PVA | 1 | – | – | – | 1 | 1 | – | – | – | 1 |
| | PVB | – | 1 | – | – | – | – | 1 | – | – | – |
| | NBR | – | – | 1 | – | – | – | – | 1 | – | – |
| | PA6 | – | – | – | 1 | 4 | – | – | – | 1 | 4 |
| Condition | Mixing temperature (°C) | 300 | 300 | 300 | 300 | 300 | 300 | 300 | 300 | 300 | 300 |
| | Mixing pressure (Mpa) | 20 | 20 | 20 | 20 | 20 | 20 | 20 | 20 | 20 | 20 |
| | Mixing time (min) | 5 | 5 | 5 | 5 | 5 | 5 | 5 | 5 | 5 | 5 |
| | EB dose (Mrad) | 3 | 3 | 1.5 | 3 | 6 | – | – | – | – | – |
| | Molding temperature (°C) | 150 | 150 | 150 | 250 | 250 | 150 | 150 | 150 | 250 | 250 |
| | Molding time (min) | 10 | 10 | 10 | 5 | 5 | 10 | 10 | 10 | 5 | 5 |
| Evaluation | Glass transition temperature (°C) / Melting point (°C) | 97 | 94 | 89 | 221 / 101 | 203 | 98 / 90 | 98 / 75 | 97 | 223 / 98 | 223 / 90 |
| | tan δ | 1.5 | 1.4 | 1.6 | 1.4 | 1.3 | 2.1 | 1.8 | 2.1 | 2.4 | 2.3 |
| | Change in phase structure size | O | O | O | O | O | × | × | × | × | × |

INDUSTRIAL APPLICABILITY

The present invention provides a method for producing a polymer alloy which can provide a polymer alloy that can be, for example, defoamed or molded while maintaining its micro phase-separated structure. The present invention also provides a polymer alloy produced by the method for producing a polymer alloy.

BRIEF DESCRIPTION OF THE DRAWINGS

Fig. 1 is a schematic view illustrating an example of a production apparatus for producing the polymer alloy of the present invention;
Fig. 2 is a schematic view illustrating another example of a production apparatus for producing the polymer alloy of the present invention;

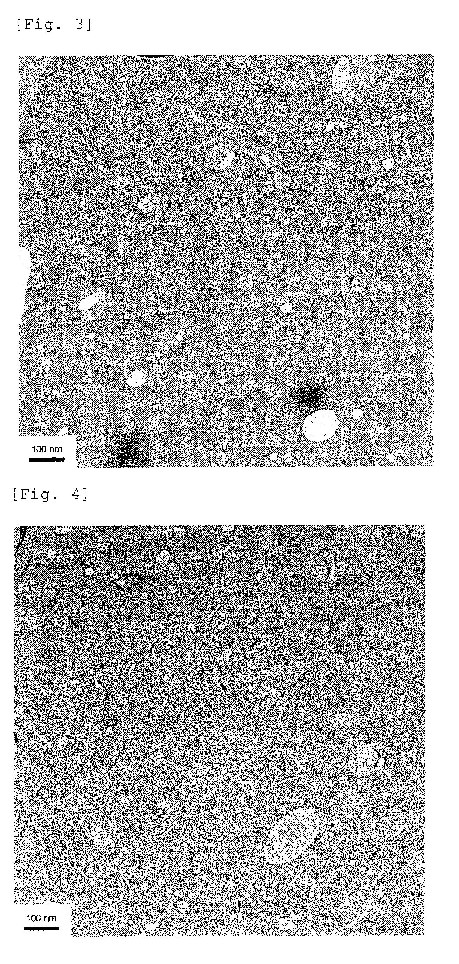

Fig. 3 is an electron microscope photograph of the phase structure of Example 1 before heat pressing at 220˚C for ten minutes;
Fig. 4 is an electron microscope photograph of the phase structure of Example 1 after heat pressing at 220˚C for ten minutes;

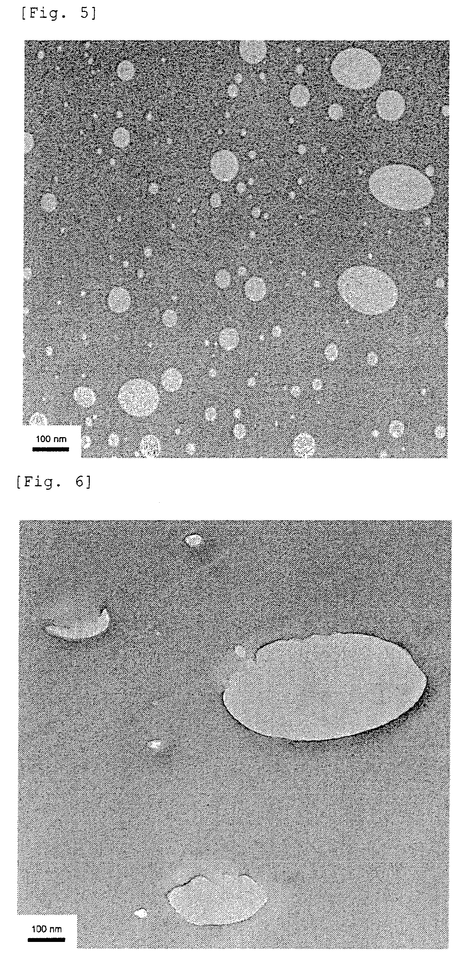

Fig. 5 is an electron microscope photograph of the phase structure of Comparative Example 1 before heat pressing at 220˚C for ten minutes; and
Fig. 6 is an electron microscope photograph of the phase structure of Comparative Example 1 after heat pressing at 220˚C for ten minutes.

EXPLANATION OF SYMBOLS

1      Production Vessel
2      Heater
3      Metal Salt
4      Thermocouple
5      Metal Salt Molten Bath
6      Extruder
7      Syringe Feeder
8      Sheath Heater
9      Quantitative Pump
10     Metal Salt Molten Bath
11     Electric Furnace
12     Cooler
13     Back Pressure Regulating Valve
14     Recovery Tank

Claims

1. A method for producing a polymer alloy,
   which comprises at least:

   a step 1 of mixing two or more resins with a solvent, the two or more resins being immiscible with each other at an ordinary temperature and an ordinary pressure, the solvent being liquid or gaseous at an ordinary temperature and an ordinary pressure;
   a step 2 of heating and pressurizing the solvent into a high-temperature, high-pressure fluid or a supercritical fluid, and mixing the solvent in this state with the resins;
   a step 3 of restoring the mixture obtained in the step 2 to an ordinary temperature and an ordinary pressure; and
   a step 4 of irradiating the mixture obtained in the step 3 with ionizing radiation.

2. The method for producing a polymer alloy according to claim 1,
   wherein a dose of the ionizing radiation in the step 4 is within a range so that a resulting polymer alloy has a viscoelasticity tan δ of not less than 1, the viscoelasticity tan δ measured under conditions of a strain of 0.1% and a frequency of 10 Hz at a temperature 20˚C higher than the highest flow temperature determined by differential scanning calorimetry (DSC), and that a phase structure size of the resulting polymer remains unchanged even after the resulting polymer alloy is heated to a temperature not lower than the highest flow temperature and then cooled.

3. A polymer alloy,
   which is produced by the method for producing a polymer alloy according to claim 1 or 2.

[Fig. 1]

[Fig. 2]

filled with SUS ball

[Fig. 3]

[Fig. 4]

[Fig. 5]

[Fig. 6]

## INTERNATIONAL SEARCH REPORT

| | International application No. |
|---|---|
| | PCT/JP2008/064880 |

A. CLASSIFICATION OF SUBJECT MATTER
*C08J3/20*(2006.01)i, *C08J3/28*(2006.01)i, *C08J7/00*(2006.01)i, *C08L29/04* (2006.01)i, *C08L101/00*(2006.01)i

According to International Patent Classification (IPC) or to both national classification and IPC

B. FIELDS SEARCHED

Minimum documentation searched (classification system followed by classification symbols)
C08J3/00-28, C08J7/00-02, 12-18, B29B7/00-94, B29C71/04, C08L1/00-101/14

Documentation searched other than minimum documentation to the extent that such documents are included in the fields searched
Jitsuyo Shinan Koho          1922-1996     Jitsuyo Shinan Toroku Koho     1996-2008
Kokai Jitsuyo Shinan Koho    1971-2008     Toroku Jitsuyo Shinan Koho     1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2003/035725 A1 (Sekisui Chemical Co., Ltd.), 01 May, 2003 (01.05.03), Claims; examples & CA 2463793 A          & EP 1445274 A1 & US 2005/0020806 A1     & CN 1575313 A | 1-3 |
| Y | JP 2001-247774 A (Kawamura Institute of Chemical Research), 11 September, 2001 (11.09.01), Claims; Par. Nos. [0007], [0044], [0059], [0063], [0064]; examples (Family: none) | 1-3 |
| Y | JP 7-102175 A (Ibiden Co., Ltd.), 18 April, 1995 (18.04.95), Claims; Par. No. [0018] (Family: none) | 1-3 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| 02 October, 2008 (02.10.08) | 14 October, 2008 (14.10.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/064880 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2002-322288 A (Mitsui Chemicals, Inc.), 08 November, 2002 (08.11.02), Full text (Family: none) | 1-3 |
| A | JP 10-330493 A (Japan Science and Technology Corp.), 15 December, 1998 (15.12.98), Full text (Family: none) | 1-3 |
| A | JP 2-134214 A (Bayer AG.), 23 May, 1990 (23.05.90), Full text & US 5106906 A & EP 361247 A2 & DE 3833219 A | 1-3 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI2134214 B
- JP H02134214 A
- JP HEI10330493 B
- JP H10310493 A
- US 7129322 B
- JP HEI539403 B
- JP H0539403 A
- JP HEI5212828 B
- JP H05212828 A
- JP 3038825 B
- JP 3019741 B
- JP 3030953 B